# EUROPÄISCHE PATENTSCHRIFT

(11) **EP 1 886 030 B1**
(45) Veröffentlichungstag und Bekanntmachung des Hinweises auf die Patenterteilung: **22.06.2016**
(21) Anmeldenummer: 06753933.8
(22) Anmeldetag: 26.05.2006
(51) Int. Cl.: F16B 19/10, F16B 19/05, F16B 5/04

(54) **NIET**
RIVET
RIVET

(30) Priorität: 31.05.2005 AT 9332005
(43) Veröffentlichungstag der Anmeldung: 13.02.2008
(73) Patentinhaber: Singh, Sumanjit, 85080 Gaimersheim (DE)
(72) Erfinder: KHALIL, Ziad, A-5280 Braunau am Inn (AT); SIMON, Peter, 01561 Skässchen (DE); SINGH, Sumanjit, 85080 Gaimersheim (DE)
(74) Vertreter: Wirnsberger, Gernot
(86) Internationale Anmeldenummer: PCT/EP2006/005085
(87) Internationale Veröffentlichungsnummer: WO 2006/128652

(56) Entgegenhaltungen:
- EP-A- 0 640 771
- EP-A- 1 359 330
- GB-A- 2 371 344
- US-A- 2 282 711
- US-A- 2 465 144
- US-A- 2 754 703
- US-A- 3 047 181

## Beschreibung

Die Erfindung betrifft einen Niet zum Verbinden von mit Bohrungen durchsetzten Teilen, insbesondere Flugzeugbauteilen, umfassend einen Hülsenteil, welcher einen Setzkopf mit einem axial verlaufenden Hohlraum und einen an den Setzkopf anschließenden Schaft aufweist oder aus diesem Setzkopf besteht, und einen Nietdorn, welcher einen im Wesentlichen zylindrischen Grundkörper und einen relativ zu dessen Durchmesser verbreiterten Nietdornkopf aufweist und welcher den Hülsenteil mit seinem Grundkörper entlang des Hohlraumes durchsetzt, wobei der Nietdorn am zylindrischen Grundkörper axial verlaufende Rippen aufweist, wobei Material des Schaftes zwischen die Rippen einfließen kann und wobei der Nietdorn in Ebenen normal zu einer Längsachse und um diese verlaufende Riffeln aufweist, über die der Nietdorn mit dem Setzkopf formschlüssig in Verbindung steht.

Des Weiteren betrifft die Erfindung eine Nietverbindung zum Verbinden von mit Bohrungen durchsetzten Teilen, insbesondere Flugzeugbauteilen, umfassend einen Hülsenteil, welcher aus einem Setzkopf mit einem axial verlaufenden Hohlraum besteht, und einen Nietdorn, welcher einen im Wesentlichen zylindrischen Grundkörper und einen relativ zu dessen Durchmesser verbreiterten Nietdornkopf aufweist und welcher den Hülsenteil mit seinem Grundkörper entlang des Hohlraumes durchsetzt, wobei der Nietdorn am zylindrischen Grundkörper axial verlaufende Rippen aufweist, zwischen welche beim Einziehen des Nietdornes Material der Teile einfließen kann, und wobei der Nietdorn in Ebenen normal zu einer Längsachse und um diese verlaufende Riffeln aufweist, über die der Nietdorn mit dem Setzkopf formschlüssig in Verbindung steht.

Niete werden in großen Stückzahlen hergestellt und finden breite Anwendung beim Fügen von Werkstücken. Insbesondere wenn Werkstücke verbunden werden sollen, welche aus unterschiedlichen Materialien bestehen, und Fügetechniken wie Löten, Schweißen oder Kleben nicht anwendbar sind, stellt ein Zusammenfügen durch Niete eine praktikable alternative Möglichkeit des Verbindens dar. Dabei werden die zu verbindenden Werkstücke zuerst mit Bohrungen versehen und die Werkstücke unter im Idealfall achsfluchtender Ausrichtung der Bohrungsachsen aneinander gelegt. Anschließend wird ein Setzkopf eines Hülsenteils an einem Bohrloch des ersten Werkstückes angesetzt und dort fixiert gehalten und ein die Bohrungen durchsetzender Nietdorn durch den fixierten Setzkopf und einen daran gegebenenfalls anschließenden Schaft gezogen, bis dessen verbreiterter Nietdornkopf am zweiten Werkstück zum Anliegen kommt oder der verbreiterte Nietdornkopf einen endseitigen Hülsenteil unter Ausbildung einer kraftschlüssigen Verbindung verformt hat. Solche kraftschlüssige Verbindungen sind beispielsweise im Flugzeugbau, wo einzelne Bauteile aus verschiedenartigen Materialien miteinander kombiniert werden, oftmals anzutreffen.

Um verschiedenartige Werkstücke durch ein Nieten zusammenzufügen ist es wie erwähnt erforderlich, diese mit Bohrungen zu versehen, in welchen ein Niet Platz findet. In der Praxis tritt in diesem Zusammenhang häufig der Fall auf, dass zwei Bohrungen, welche zur Aufnahme eines Nietes vorgesehen sind, unterschiedliche Bohrungsdurchmesser aufweisen. Stellt man die erforderlichen Bohrungen in den Werkstücken separat her, so lassen sich schwerlich exakt gleiche Bohrungsdurchmesser erzielen. Aber auch wenn man zu verbindende und aus verschiedenartigen Werkstoffen bestehende Werkstücke übereinander legt und jeweils korrespondierende Bohrungen in einem Arbeitsgang bzw. durch eine einzige Bohroperation herstellt, können die so hergestellten Bohrungen aufgrund unterschiedlicher Werkstoffeigenschaften verschiedene Bohrungsdurchmesser aufweisen. Dabei kann überdies die Art der Bohroperation einen Einfluss auf Größe und Form korrespondierender Bohrungen haben, wie es beispielsweise für ein Laserbohren bekannt ist.

Werden Werkstücke mit unterschiedlichen Bohrungsdurchmessern durch ein Nieten zusammengefügt, so hat dies zur Folge, dass der Niet in den Bohrungen nicht an allen Bohrungswänden bzw. an beiden Werkstücken anliegen kann. Eine Verbindung zwischen den Werkstücken erfolgt daher zumindest überwiegend lediglich durch einen Kraftschluss und ein Werkstück hat in einer Ebene senkrecht zu den Bohrungsachsen ein Spiel. Eine Belastbarkeit der Nietverbindung ist entsprechend limitiert.

Es ist gemäß dem Stand der Technik versucht worden, diesen Nachteil durch Ausreiben der erforderlichen Bohrungen zu vermeiden. Eine Reiboperation stellt allerdings einen zusätzlichen Arbeitsschritt dar, der zeit- und kostenintensiv ist und insbesondere beim Verbinden von Flugzeugbauteilen, wenn an einem Bauteil tausende Bohrungen auszureiben sind, eine Produktivität signifikant mindern kann.

Aus der US 2,754,703 ist ein Niet mit einem Nietdorn mit axialen Rippen bekannt geworden, wobei der Nietdorn mit einem Setzkopf zusammenwirkt, der einen axial verlaufenden Hohlraum aufweist. Der im Wesentlichen zylindrische Grundkörper des Nietdornes mit einem relativ zu dessen Durchmesser verbreiterten Nietdornkopf wird bei der Montage in den Hohlraum des Setzkopfes geführt. Hierfür weist der Nietdorn außenseitig umlaufende radiale weitere Rippen auf, über welche der Nietdorn mit dem Setzkopf formschlüssig in Verbindung gebracht wird. Während des Setzens verflachen sich gleichzeitig die axialen Rippen durch Verformung und bilden so eine Art Pfropfen zwischen zu verbindenden Werkstücken bzw. in einer Bohrung.

Die EP 0 640 771 A1 wird als nächstliegender Stand der Technik gegenüber dem Gegenstand des Anspruchs 1 angesehen. Dieses Dokument offenbart einen Niet mit den Merkmalen des Oberbegriffes des Anspruchs 1.

Ausgehend vom vorstehend dargelegten Stand der Technik ist es Aufgabe der Erfindung, einen Niet der eingangs genannten Art anzugeben, mit welchem eine kostengünstige und verbessert belastbare Verbindung zwischen Werkstücken hergestellt werden kann, auch wenn diese unterschiedlich große Bohrungen für den Niet aufweisen.

Diese Aufgabe löst ein Niet gemäß Anspruch 1. Für einen Niet mit einem Hülsenteil ohne Schaft wird die Aufgabe durch einen Niet gemäß Anspruch 2 gelöst.

Ein erfindungsgemäßer Niet weist insbesondere den Vorteil auf, dass der Niet aufgrund der am zylindrischen Grundkörper vorgesehenen Rippen beim Verbinden von Werkstücken durch Einziehen des Nietdornes in bzw. durch den Setzkopf auch bei unterschiedlich großen Bohrungen in den Werkstücken zumindest bereichsweise an beiden Bohrungswänden bzw. Werkstücken zur Anlage kommt und eine Verbindung über eine kraftschlüssige und auch über eine formschlüssige Komponente in einfacher Weise herstellbar ist. Dabei können auch Lageungenauigkeiten, die durch eine nicht achsfluchtenden Ausrichtung der Bohrungsachsen verursacht sind, ausgeglichen werden.

Die erfingdungsgemäß vorgesehenen Rippen sind in einem weiteren Aspekt auch von Vorteil, weil bei einem Setzvorgang durch Umformung in die zwischen den Rippen vorhandenen Freiräume Material der zu verbindenden Werkstücke oder des Hülsenteiles einfließen kann, so dass ein Einziehen des Nietdornes gegenüber einer denkbaren konischen Ausführungsform eines Nietdornes erleichtert bzw. überhaupt erst ermöglicht ist. Durch die Ausbildung der Rippen mit zum Setzkopf hin gerichteten Keilflächen erfolgt ein Einziehen des Nietdornes mit geringem Kraftaufwand.

Dabei ist es in Bezug auf eine gleichmäßig hohe Belastbarkeit einer Nietverbindung von Vorteil, wenn die Rippen rotationssymmetrisch zu einer Längsachse des Nietdornes angeordnet sind.

Günstig ist es auch, um Wirkungen der Rippen über eine möglichst große Länge auszunützen bzw. zu maximieren, wenn die Rippen am Nietdornkopf anschließen.

Weiter kann es, wie sich bei Versuchen gezeigt hat, im Hinblick auf eine möglichst große Kontaktfläche mit einer mittleren Flächenpressung zwischen Nietdorn und dem Schaft bzw. den Werkstücken und folglich eine hohe kräftemäßige Belastbarkeit einer Nietverbindung günstig sein, wenn die Rippen zumindest bereichsweise eine kreisbogenförmige oder insbesondere spitzwinklige Rippenaußenkontur aufweisen.

Um ein Einziehen des Nietdornes mit geringem Kraftaufwand zu ermöglichen, sind die Rippen auch zumindest teilweise mit Keilflächen ausgebildet. Alternativ dazu können die Rippen entlang ihrer axialen Erstreckung mit im Wesentlichen gleichem Querschnitt ausgebildet sein, was in Bezug auf eine hohe Flächenpressung zwischen Rippen und Werkstücken bzw. Schaft des Hülsenteils vorteilhaft ist. Möglich ist es auch, dass die Rippen, vom Nietdornkopf in Richtung des Setzkopfes betrachtet, zuerst einen Bereich mit konstantem Querschnitt aufweisen, an welchen ein abgeschrägter bzw. keilförmiger Bereich anschließt. Dadurch ist eine leichte Einziehbarkeit des Nietdornes bei gleichzeitig hoher Flächenpressung möglich.

Ein Nietdorn eines erfindungsgemäßen Nietes kann hohl ausgebildet sein. Von Vorteil ist es jedoch, wenn der Nietdorn massiv ausgebildet ist, weil der Nietdorn dann radialen Kräften, welche auf diesen einwirken, besser standhalten kann, die Nietverbindung eine höhere Steifigkeit aufweist und beim Einziehen eine höhere Zugkraft auf den Nietdorn ausgeübt werden kann, ohne dass dieser Schaden nimmt.

Die Rippen können am Nietdorn nach dessen Herstellung angebracht werden, beispielsweise durch Löten oder Kleben oder eine andere Art des Verbindens. Allerdings stellt jede Verbindungsstelle bei Belastung eine potentielle Schwachstelle dar, weshalb der Nietdorn bevorzugt einteilig ausgebildet ist. Walzen oder Kaltumformen sind geeignete und einfache Verfahren zur Herstellung eines massiven Nietdornes mit axial verlaufenden Rippen.

In besonders hervorzuhebender Weise hat es sich bewährt, wenn der Hülsenteil einen konstanten äußeren Durchmesser aufweisenden Schaft aufweist, dessen erstes Ende am Hohlraum des Setzkopfes anschließt und dessen zweites Ende mit einem zumindest denselben äußeren Durchmesser aufweisenden Nietdornkopf in Verbindung steht, wobei der Schaft in Richtung vom ersten Ende zum zweiten Ende mit einem Aufweitbereich mit einem konstanten inneren Durchmesser und einem anschließenden Stauchbereich mit zumindest teilweise vergrößertem inneren Durchmesser ausgebildet ist und die Rippen in einem dem Stauchbereich des Schaftes entsprechenden Bereich anliegen.

Bei dieser Variante in Blindnietausführung kann aufgrund der Rippen nach einem Setzvorgang eine ausgezeichnete Flächenpressung sowohl zwischen Nietdorn und Schaft als auch zwischen Schaft und den Werkstücken erreicht werden. Die Rippen erlauben es einerseits, dass der Nietdorn mit im Vergleich zum Stand der Technik geringerem Kraftaufwand eingezogen werden kann, weil Material des Schaftes teilweise in Freiräume zwischen den Rippen einfließen kann und durch die Umformung eine Verfestigung erzielt wird, welche so hoch ist, dass eine hochbelastbare Verbindung erreicht wird, nicht jedoch ein Einziehen des Nietdornes erschwert bzw. verhindert wird. Andererseits bewirken die Rippen beim Einziehen gleichzeitig eine zumindest bereichsweise Aufweitung des Schaftes und pressen diesen unter Herstellung eines Formschlusses an die Bohrungswände in den Werkstücken, so dass nach dem Setzvorgang sowohl Schaft und Nietdorn als auch Schaft und Werkstücke fest mit einander verbunden sind. Somit ist sowohl eine kraftschlüssige als auch eine exzellente formschlüssige Verbindung zwischen dem Nietdorn und dem Schaft einerseits und dem Schaft und den Werkstücken andererseits gegeben.

Für spezielle Zwecke, beispielsweise wenn Setzkopf und Schaft nach Setzen des Nietes stark divergierenden Beanspruchungen ausgesetzt sind, kann auch vorgesehen sein, dass der Setzkopf und der Schaft des Hülsenteiles aus verschiedenen Materialien bestehen. Beispielsweise können Setzkopf und Schaft des Hülsenteils getrennt als Einzelteile gefertigt sein, welche zusammen mit einem Nietdorn einen Bausatz bilden, welcher erst bei einer Herstellung einer Nietverbindung zusammengebaut wird; Die Einzelteile können in diesem Fall aus verschiedenen Werkstoffen bestehen, welche je nach zu erwartender Belastung des Einzelteiles gewählt sind. Möglich ist auch, dass die Niethülse aus einem Werkstoff gefertigt ist und im Bereich des Setzkopfes andere Eigenschaften aufweist als im Bereich des Schaftes, beispielsweise nach einer örtlich begrenzten Wärmebehandlung oder einer thermomechahischen Behandlung des Setzkopfes.

Wenn eine innere Oberfläche des Schaftes im Stauchbereich entsprechend einer Oberfläche des Nietdornes im mit Rippen ausgebildeten Bereich desselben geformt ist, kann eine besonders hohe Flächenpressung sowohl zwischen dem Schaft des Hülsenteiles und den Werkstücken als auch zwischen Schaft und Nietdorn erreicht werden. In dieser Variante eines Nietes wird sowohl ein Kraftschluss als auch ein vollflächiger Formschluss erreicht, was zu hoch beanspruchbaren Nietverbindungen führt.

Im Folgenden ist die Erfindung anhand von Ausführungsbeispielen noch weitergehend beschreiben.

Es zeigen:
Figur 1: Einen Nietdorn eines erfindungsgemäßen Nietes;
Figur 2: Einen Blindniet vor einem Setzvorgang;
Figur 3: Einen Blindniet nach einem Setzvorgang;
Figur 4: Einen Senkkopfniet nach einem Setzvorgang;
Figur 5a: Eine auf einem Grundkörper eines Nietdorns befindliche Rippe, welche entlang ihrer axialen Erstreckung mit einem im Wesentlichen gleichen Querschnitt ausgebildet ist;
Figur 5b: Eine auf einem Grundkörper eines Nietdorns befindliche Rippe, welche mit einer ebenen Keilfläche und einer im Wesentlichen kreisbogenförmigen Rippenaußenkontur ausgebildet ist;
Figur 5c: Eine auf einem Grundkörper eines Nietdorns befindliche Rippe, welche mit einer gekrümmten Keilfläche und einer spitzwinkligen Rippenaußenkontur ausgebildet ist;
Figur 6: Eine teilweise Darstellung eines erfindungsgemäßen Nietes, dessen Hülsenteil aus mehreren Einzelteilen besteht;
Figur 7: Einen weiteren Niet, dessen Hülsenteil aus mehreren Einzelteilen besteht, in Teildarstellung.

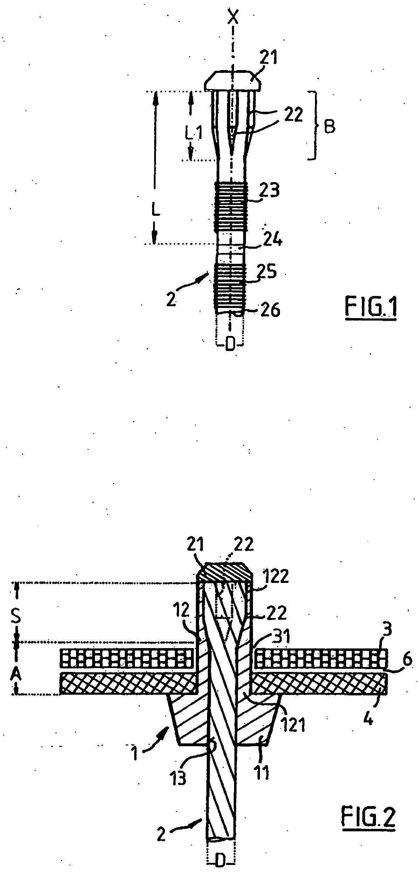

In Figur 1 ist beispielhaft ein Nietdorn **2,** wie er in einem erfindungsgemäßen Niet angewendet wird, dargestellt. Der Nietdorn **2,** welcher in der Regel aus einem metallischen Werkstoff gefertigt ist und in günstiger Weise gänzlich aus einer hochfesteri Stahllegierung massiv hergestellt ist, weist einen im Wesentlichen zylindrischen Grundkörper **26** mit einer Längsachse **X** und einem Durchmesser D auf. Am Grundkörper **26** können, wie in Figur 1 schematisch dargestellt, in Ebenen normal zur Längsachse **X** befindliche und um diese verlaufende Riffeln **23** vorgesehen sein, über die der Nietdorn **2** beim Setzen des.Nietes mit einem Setzkopf in Verbindung gebracht wird bzw. nach dem Setzen formschlüssig in Verbindung steht. Diese Riffeln **23** sind bevorzugt asymmetrisch ausgebildet, um eine Vorspannung zu erhöhen: Weiter sind Riffeln **25** vorgesehen, über welche der Nietdorn **2** mit einer Setzvorrichtung gezogen werden kann. Ferner weist der Nietdorn **2** eine Sollbruchstelle **24** auf, an welcher der Nietdorn **2** am Ende eines Setzvorganges bzw. nach Herstellen einer Nietverbindung brechen soll, so dass das Ende des Nietdornes **2** mit einem Setzkopf eines Nietes vorzugsweise etwa bündig abschließt. Daneben weist der Nietdorn **2** an einem Ende einen gegenüber dem Durchmesser **D** des Grundkörpers **26** verbreiterten Nietdornkopf **21** auf, an welchen Rippen **22** anschließen. Die Rippen **22** verlaufen axial bzw. parallel zur Längsachse **X** des Nietdornes **2** und sind um diese Längsachse **X** rotationssymmetrisch angeordnet, wobei eine Anzahl der Rippen **22** vom Durchmesser **D** des zylindrischen Grundkörpers **26** abhängt und beispielsweise bei einem Durchmesser **D** von **10** mm zwischen vier und zehn liegt, so dass der Nietdorn **2** einerseits gut eingezogen werden kann, andererseits aber auch eine hohe Flächenpressung zwischen dem Nietdorn **2** und einem Schaft oder Werkstücken erreicht wird.

In Figur 2 ist ein Querschnitt eines erfindungsgemäßen Blindnietes mit einem Nietdorn **2** gemäß Figur 1 nach Einbringen in Bohrungen zweier zu verbindender Werkstücke **3, 4,** jedoch vor einem Setzen des Nietes, gezeigt. Der Blindniet umfasst neben dem beschriebenen Nietdorn **2** einen Hülsenteil **1 mit** einem Setzkopf **11** und einem Schaft **12,** welcher mit einem Ende **121** am sich axial erstreckenden Hohlraum des Setzkopfes **11** anschließt. Der Schaft **12** ist mit einem konstanten äußeren Durchmesser ausgebildet. Im Bereich seines zweiten Endes **122** ist der Nietdornkopf **21** des Nietdornes **2** aufgesetzt, wobei der Nietdornkopf **21** im Anlagebereich an den Schaft **12** denselben äußeren Durchmesser wie dieser hat und anschließend verjüngt ausgeführt ist. Dies ermöglicht es, den Niet einzusetzen, auch wenn das Werkstück **3** nicht zugänglich ist.

Im Inneren weist der Hülsenteil **1** im Bereich des Setzkopfes **11** und des daran anschließenden Aufweitbereiches A des Schaftes **12** einen im Wesentlichen zylinderförmig geformten Hohlraum auf, welcher den entsprechend dimensionierten zylindrischen Grundkörper **26** des Nietdorns **2** aufnimmt. In einem an den Aufweitbereich **A** anschließenden Stauchbereich S ist der Schaft **12** mit einem im Vergleich zum Aufweitbereich **A** vergrößerten inneren Durchmesser ausgebildet, um für die Rippen **22** des Nietdornes **2** Platz zu bieten. Der vergrößerte innere Durchmesser des Schaftes **12** ist so ausgelegt, dass die Rippen **22** am Schaft **12** innen punktuell anliegen. Die einzelnen Teile des Nietes lösen sich dann nicht mehr voneinander, was die Handhabung des Nietes bei einer Montage erleichtert.

Die in Figur 2 dargestellte Situation liegt, wie erwähnt, vor dem Setzen des Nietes, also vor einem Einziehen des Nietdornes **2 in** den Hülsenteil **1,** vor. Weisen die für den Niet erforderlichen Bohrungen in den Werkstücken **3, 4** unterschiedliche Bohrungsdurchmesser auf, so liegt der Schaft **12** nicht an beiden Werkstücken **3, 4** an, sondern weist gegenüber einem Werkstück **3** und gegebenenfalls auch einem Werkstück **4** einen freien Abstand **31** auf.

Wird nun der Nietdorn **2** durch Ziehen an Riffeln **25** in den Hülsenteil **1** unter Halten desselben am Setzkopf **11** eingezogen, so bewirkt der am Schaft **12** aufsitzende Nietdornkopf **21** eine Stauchung bzw. Verformung des Schaftes **12** an dessen zweiten Ende **122,** so dass dieser gefaltet und ein Schließkopf ausgebildet wird. Gleichzeitig dringen die am Nietdornkopf **21** anschließenden Rippen **22** in den mit geringerem inneren Durchmesser ausgebildeten Bereich des Schaftes **12** vor und bewirken dort eine Aufweitung des Schaftes **12,** so dass das zwischen Schaft **12** und Werkstück **3** vorhandene Spiel **31** eliminiert wird. Beim Aufweiten kann, sofern der massive Nietdorn **2** lediglich im Bereich der Rippen **22** am Schaft **12** anliegt, überschüssiges Material des Schaftes **12** auch in Freiräume zwischen den Rippen **22** gedrängt werden, so dass ein guter Formschluss und eine günstige Spannungsverteilung im Niet und den Werkstücken **3, 4** erreicht wird. Da der Schaft **12** an seinem Ende **122** dünnwandig ist und der Nietdorn **2** aufgrund der länglich geformten Rippen **22** leicht in den Schaft **12** eingleitet, ist lediglich eine geringe Kraft erforderlich, um den Niet zu setzen. Am Ende des Setzvorganges schließlich sind das Spiel **31** zwischen Schaft **12** und der Abstand **6** zwischen den Werkstücken **3, 4** nicht mehr vorhanden und die Werkstücke **3, 4** sind kraft- und formschlüssig miteinander verbunden.

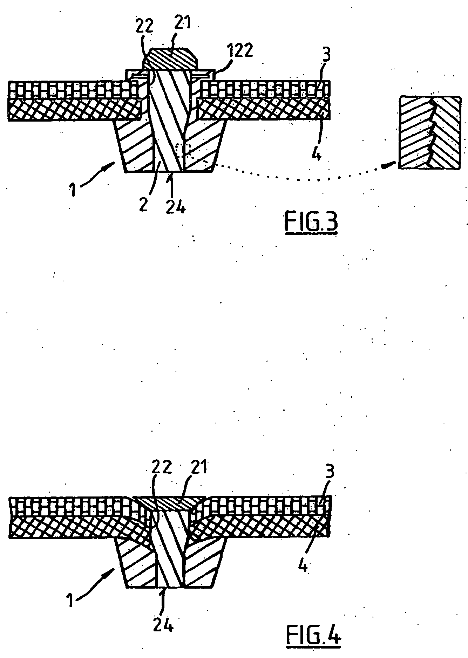

Nach dem Setzen des Nietes liegt der Grundkörper **26** an einer Innenfläche **13** des Setzkopfes **11** und am Schaft **12** im Wesentlichen vollflächig an. Diese Situation ist in Figur 3 dargestellt. In diesem Zusammenhang ist es günstig, wie erwähnt, wenn die Riffeln **23** im Querschnitt asymmetrisch bzw. sägezahnförmig ausgebildet sind, wie aus dem vergrößerten Ausschnitt der Figur 3 ersichtlich.

Es versteht sich für den Fachmann, dass vor dem Setzen des Nietes auch zwischen dem Werkstück **4** und dem Schaft **12** ein Spiel vorhanden sein kann. In diesem Fall werden beim Setzen des Nietes aufgrund der Verformung des Schaftes **12** sowohl ein Spalt-zwischen Schaft **12** und Werkstück **3** als auch ein Spalt zwischen Schaft **12** und Werkstück **4** geschlossen. Ebenso umfasst die Erfindung Varianten, in denen der Schaft **12** mit konstanter Wandstärke ausgebildet ist.

Alternativ zu der in den Figuren 2 und 3 dargestellten Ausführungsform ist es möglich, bei ansonsten gleicher geometrischer Gestaltung die Rippen am Schaft anstatt am Nietdorn anzubringen, was allerdings höhere Herstellungskosten mit sich bringt, da eine Einarbeitung von Rippen im Schaft aufwändiger ist, als eine Einarbeitung von Rippen an einer Außenseite eines Nietdornes.

Figur 4 zeigt einen erfindungsgemäßen Niet, bei dem der Hülsenteil **1** lediglich aus einem Setzkopf **12** besteht und kein Schaft vorhanden ist, nach Setzen des Nietes. Der Nietdorn **2,** welcher mit einem als Senkkopf ausgebildeten Nietdornkopf **21** ausgestattet ist, ermöglicht im Bereich einer Oberfläche des Werkstückes **3** einen bündigen Abschluss. Bei dieser Ausführungsvariante liegen die Rippen **22** des Nietdornes **2** unmittelbar an den Werkstücken **3, 4,** welche bohrungsseitig durch das Setzen des Nietes verformt sind, an und bewirken derart einen Formschluss.

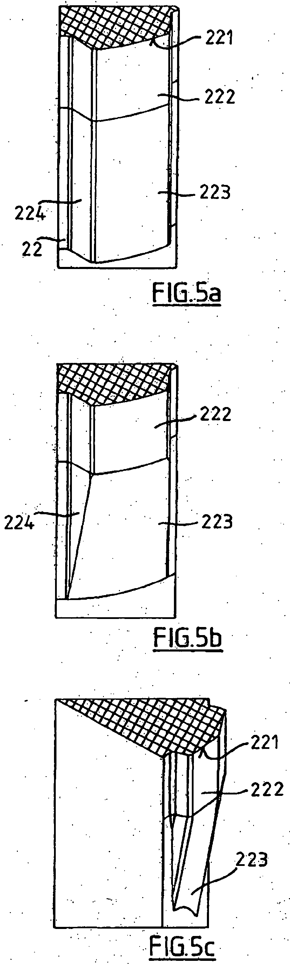

Die Figuren 5a, 5b und 5c zeigen mögliche Ausführungsformen von Rippen **22,** welche sich in Versuchen bewährt haben. Wie in Figur 5a gezeigt, kann eine Rippe **22** mit einem im Wesentlichen gleichen Querschnitt entlang ihrer Längserstreckung und einer etwa kreisbogenförmigen Rippenaußenkontur **221** ausgebildet sein. Beim Setzen eines Nietes gemäß Figur 2 gleiten dann die kreisbogenförmigen, parallel zur Längsachse **X** des Nietdornes **2** verlaufenden Frontflächen **222, 223** am Schaft **12** entlang und weiten diesen auf. Simultan kann Material des Schaftes **12** in die zwischen den Rippen **22** vorhandenen Freiräume fließen und sich dort an Rippenseitenflächen **224** anlegen.

In einer zur Ausführungsform nach Figur 5a weiter verbesserten Ausführungsform können die Rippen **22** entsprechend Figur 5b auch mit einer geneigten Frontfläche **223** ausgebildet sein, welche als Keilfläche wirkt und ein Gleiten des Nietdornes **2** beim Einziehen erleichtert.

Eine besonders günstige Ausführungsform von Rippen **22** zeigt schließlich Figur 5c. Bei einer solchen Form von Rippen **22** ist eine hohe Flächenpressung bzw. Optimierung von Spannungen im Niet und den Werkstücken **3, 4** bei guten Einzieheigenschaften desselben gegeben.

In weiteren möglichen Ausführungsformen können die Rippen **22** auch abgestuft sein und/oder mit unterschiedlichen Querschnitten ausgebildet sein.

Die Rippen **22** sind mit einer Länge **L1** und einer Breite derart ausgebildet, dass beim Einziehen des Nietdornes **2** eine Aufweitung des Schaftes **12** bzw. der Werkstücke **3, 4** erfolgt. Beträgt eine Länge der Rippen zumindest 25 %, vorzugsweise mehr als 40 %, der Länge **L** des Gründkörpers **26** zwischen Nietdornkopf **21** und einer Sollbruchstelle **24** und/oder bedecken die Rippen **22** im Rippenbereich **B** (Figur 1) zumindest 40 %, vorzugsweise mehr als 50 %, der Außenfläche des Grundkörpers **26,** kann eine besonders wirksame Aufweitung des Schaftes **12** und ein für eine hohe Flächenpressung vorteilhaftes Einfließen von Material zwischen die Rippen **22** erreicht werden.

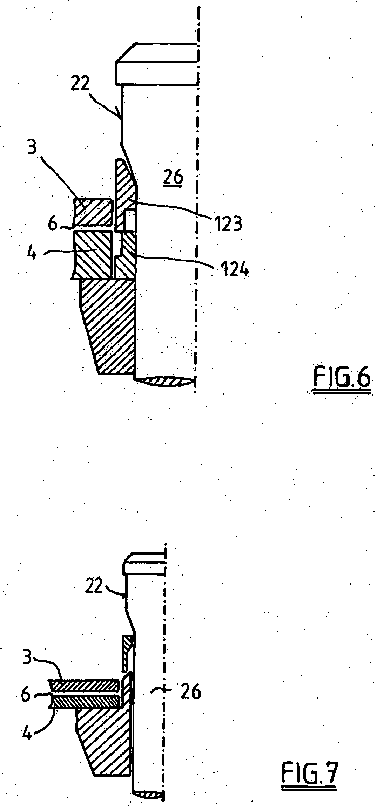

In den Figuren 6 und 7 sind schließlich Varianten eines erfindungsgemäßen Nietes dargestellt, welche sich als vorteilhaft in Bezug auf das Schließen eines axialen Spaltes **6** (Figur 1) erwiesen haben. In diesen Varianten umfasst das Hülsenteil **1** einen Schaft **12,** der aus mehreren Teilen besteht, so dass vor und/oder während eines Formens eines Schließkopfes eine axiale Kraft auf ein Werkstück **3** wirkt. Beispielsweise wird bei der in Figur 6 dargestellten Variante beim Einziehen des Nietdornes **2** die obere Hülse **123** durch die Rippen **22** aufgeweitet, der Spalt zwischen Hülse und Oberblech **3** geschlossen und anschließend der obere Hülse **123** samt Oberblech **3** mitgenommen und der Spalt **6** zwischen den Blechen überbrückt, ehe sowohl die obere Hülse **123** als auch die untere Hülse **124** noch stärker aufgeweitet werden und ein belastbarer Formschluss hergestellt wird.

Ähnlich ist bei der in Figur 7 gezeigten Variante sichergestellt, dass noch vor einer Aufweitung des Schaftes **12** in Richtung der Werkstücke **3, 4** und einer Ausbildung eines Formschlusses eine axial wirkende Kraft auf das Werkstück **3** ausgeübt wird, so dass der Spalt **6** geschlossen werden kann. Anstelle einer solchen mehrteiligen Ausbildung des Schaftes kann dieser auch einteilig mit einer Soll-Bruchstelle öder einer oder mehreren Soll-Verformungsstelle(n) ausgebildet sein.

## Patentansprüche

1. Niet zum Verbinden von mit Bohrungen durchsetzten Teilen (3, 4), insbesondere Flugzeugbauteilen, umfassend einen Hülsenteil (1), welcher einen Setzkopf (11) mit einem axial verlaufenden Hohlraum und einen an den Setzkopf (11) anschließenden Schaft (12) aufweist, und einen Nietdorn (2), welcher einen im Wesentlichen zylindrischen Grundkörper (26) und einen relativ zu dessen Durchmesser (D) verbreiterten Nietdornkopf (21) aufweist und welcher den Hülsenteil (1) mit seinem Grundkörper (26) entlang des Hohlraumes durchsetzt, wobei der Nietdorn (2) am zylindrischen Grundkörper (26) axial verlaufende Rippen (22) aufweist, wobei Material des Schaftes (12) zwischen die Rippen (22) einfließen kann, **dadurch gekennzeichnet, dass** der Nietdorn (2) in Ebenen normal zu einer Längsachse (X) und um diese verlaufende Riffeln (23) aufweist, über die der Nietdorn (2) mit dem Setzkopf (11) formschlüssig in Verbindung steht und dass die Rippen (22) beim Einziehen des Nietdornes (2) ein Aufweiten des Schaftes (12) bewirken, wobei die Rippen (22) mit zum Setzkopf (11) hin gerichteten Keilflächen (223) ausgebildet sind.

2. Nietverbindung zum Verbinden von mit Bohrungen durchsetzten Teilen (3, 4), insbesondere Flugzeugbauteilen, umfassend einen Niet und die von Bohrungen durchsetzten Teile (3, 4), wobei der Niet einen Hülsenteil (1) umfasst, welcher aus einem Setzkopf (11) mit einem axial verlaufenden Hohlraum besteht, und einen Nietdorn (2), welcher einen im Wesentlichen zylindrischen Grundkörper (26) und einen relativ zu dessen Durchmesser (D) verbreiterten Nietdornkopf (21) aufweist und welcher den Hülsenteil (1) mit seinem Grundkörper (26) entlang des Hohlraumes durchsetzt, wobei der Nietdorn (2) am zylindrischen Grundkörper (26) axial verlaufende Rippen (22) aufweist, zwischen welche beim Einziehen des Nietdornes (2) Material der Teile (3, 4) einfließen kann, und wobei der Nietdorn (2) in Ebenen normal zu einer Längsachse (X) und um diese verlaufende Riffeln (23) aufweist, über die der Nietdorn (2) mit dem Setzkopf (11) formschlüssig in Verbindung steht, **dadurch gekennzeichnet, dass** die Rippen (22) mit zum Setzkopf (11) hin gerichteten Keilflächen (223) ausgebildet sind.

3. Niet oder Nietverbindung nach Anspruch 1 oder 2, **dadurch gekennzeichnet, dass** die Rippen (22) zwischen Nietdornkopf (21) und dem Hohlraum angeordnet sind.

4. Niet oder Nietverbindung nach einem der Ansprüche 1 bis 3, **dadurch gekennzeichnet, dass** der Grundkörper (26) den axialen Hohlraum an einer Innenfläche (13) des Setzkopfes (11) anliegend durchsetzt.

5. Niet oder Nietverbindung nach einem der Ansprüche 1 bis 4, **dadurch gekennzeichnet, dass** die Rippen (22) rotationssymmetrisch zu einer Längsachse (X) des Nietdornes (2) angeordnet sind.

6. Niet oder Nietverbindung nach einem der Ansprüche 1 bis 5, **dadurch gekennzeichnet, dass** die Rippen (22) am Nietdornkopf (21) anschließen.

7. Niet oder Nietverbindung nach einem der Ansprüche 1 bis 6, **dadurch gekennzeichnet, dass** die Rippen (22) zumindest bereichsweise eine kreisbogenförmige oder insbesondere spitzwinklige Rippenaußenkontur (221) aufweisen.

8. Niet oder Nietverbindung nach einem der Ansprüche 1 bis 7, **dadurch gekennzeichnet, dass** die Rippen (22) entlang ihrer axialen Erstreckung mit im Wesentlichen gleichem Querschnitt ausgebildet sind.

9. Niet oder Nietverbindung nach einem der Ansprüche 1 bis 8, **dadurch gekennzeichnet, dass** der Nietdorn (2) massiv ausgebildet ist.

10. Niet oder Nietverbindung nach einem der Ansprüche 1 bis 9, **dadurch gekennzeichnet, dass** der Nietdorn (2) durch Walzen oder Kaltumformen erstellt ist.

11. Niet oder Nietverbindung nach einem der Ansprüche 1 bis 10, **dadurch gekennzeichnet, dass** der Nietdorn (2) einteilig ausgebildet ist.

12. Niet nach Anspruch 1, **dadurch gekennzeichnet, dass** der Hülsenteil (1) einen konstanten äußeren Durchmesser aufweisenden Schaft (12) aufweist, dessen erstes Ende (121) am Hohlraum des Setzkopfes (11) anschließt und dessen zweites Ende (122) mit einem zumindest denselben äußeren Durchmesser aufweisenden Nietdornkopf (21) in Verbindung steht, wobei der Schaft (12) in Richtung vom ersten Ende (121) zum zweiten Ende (122) mit einem Aufweitbereich (A) mit einem konstanten inneren Durchmesser und einem anschließenden Stauchbereich (S) mit zumindest teilweise vergrößertem inneren Durchmesser ausgebildet ist und die Rippen (22) in einem dem Stauchbereich (S) des Schaftes (12) entsprechenden Bereich anliegen.

13. Niet nach Anspruch 12, **dadurch gekennzeichnet, dass** der Setzkopf (11) und der Schaft (12) des Hülsenteiles (1) aus verschiedenen Materialien bestehen.

14. Niet nach Anspruch 12 oder 13, **dadurch gekennzeichnet, dass** der Hülsenteil (1) aus einem Werkstoff gefertigt ist und im Bereich des Setzkopfes (11) andere Eigenschaften aufweist als im Bereich des Schaftes (12).

15. Niet nach einem der Ansprüche 12 bis 14, **dadurch gekennzeichnet, dass** eine innere Oberfläche des Schaftes (12) im Stauchbereich (S) entsprechend einer Oberfläche des Nietdornes (2) im mit Rippen (22) ausgebildeten Bereich desselben geformt ist.

16. Niet nach einem der Ansprüche 12 bis 15, **dadurch gekennzeichnet, dass** die Länge (L1) der Rippen (22) zumindest 25 %, vorzugsweise mehr als 40 %, der Länge (L) des Grundkörpers (26) zwischen Nietdornkopf (21) und einer Sollbruchstelle (24) des Grundkörpers (26) beträgt.

17. Niet nach einem der Ansprüche 12 bis 16, **dadurch gekennzeichnet, dass** die Rippen (22) im Rippenbereich (B) zumindest 40 %, vorzugsweise mehr als 50 %, der Außenfläche des Grundkörpers (26) bedecken.

18. Niet nach einem der Ansprüche 12 bis 17, **dadurch gekennzeichnet, dass** der Hülsenteil (1) einen Schaft (12) umfasst, der aus mehreren Teilen besteht und/oder eine Soll-Bruchstelle oder eine Soll-Verformungsstelle aufweist, so dass vor und/oder während eines Formens eines Schließkopfes eine axiale Kraftkomponente auf ein Teil (3) wirkt.

## Claims

1. A rivet for purposes of connecting parts (3, 4) penetrated by holes, in particular aircraft components, comprising a sleeve section (1), which has a swaging head (11) with an axially running cavity, and a shaft (12) adjoining the swaging head (11), and a riveting mandrel (2), which has an essentially cylindrical base body (26) and a riveting mandrel head (21) widened relative to the diameter (D) of the base body, and which penetrates the sleeve section (1) with its base body (26) along the cavity, wherein on the cylindrical base body (26) the riveting mandrel (2) has axially running ribs (22), wherein material of the shaft (12) can flow in between the ribs (22), **characterised in that** the riveting mandrel (2) has corrugations (23) in planes normal to a longitudinal axis (X) and running around the latter, by means of which the riveting mandrel (2) is connected with the swaging head (11) in a form fit, and **in that** the ribs (22) cause an expansion of the shaft (12) when the riveting mandrel (2) is pulled in, wherein the ribs (22) are designed with wedge-shaped surfaces (223) directed towards the swaging head (11).

2. A riveted joint for purposes of connecting parts (3, 4) penetrated by holes, in particular aircraft components, comprising a rivet and the parts (3, 4) penetrated by holes, wherein the rivet comprises a sleeve section (1), which consists of a swaging head (11) with an axially running cavity, and a riveting mandrel (2), which has an essentially cylindrical base body (26) and a riveting mandrel head (21) widened relative to the diameter (D) of the latter, and which penetrates the sleeve section (1) with its base body (26) along the cavity, wherein on the cylindrical base body (26) the riveting mandrel (2) has axially running ribs (22), in between which material of the parts (3, 4) can flow when the riveting mandrel (2) is pulled in, and wherein the riveting mandrel (2) has corrugations (23) in planes normal to a longitudinal axis (X) and running around the latter, by means of which the riveting mandrel (2) is connected with the swaging head (11) in a form fit, **characterised in that** the ribs (22) are designed with wedge-shaped surfaces (223) directed towards the swaging head (11).

3. The rivet or riveted joint in accordance with claim 1 or 2, **characterised in that** the ribs (22) are arranged between the riveting mandrel head (21) and the cavity.

4. The rivet or riveted joint in accordance with one of the claims 1 to 3, **characterised in that** the base body (26) penetrates the axial cavity, fitting closely against an inner surface (13) of the swaging head (11).

5. The rivet or riveted joint in accordance with one of the claims 1 to 4, **characterised in that** the ribs (22) are arranged with rotational symmetry relative to a longitudinal axis (X) of the riveting mandrel (2).

6. The rivet or riveted joint in accordance with one of the claims 1 to 5, **characterised in that** the ribs (22) adjoin the riveting mandrel head (21).

7. The rivet or riveted joint in accordance with one of the claims 1 to 6, **characterised in that** the ribs (22) have, at least in some regions, a circular arc-shaped, or in particular an acute-angled, external contour (221).

8. The rivet or riveted joint in accordance with one of the claims 1 to 7, **characterised in that** the ribs (22) are designed along their axial extent with an essentially constant cross-section.

9. The rivet or riveted joint in accordance with one of the claims 1 to 8, **characterised in that** the riveting mandrel (2) is designed as a solid.

10. The rivet or riveted joint in accordance with one of the claims 1 to 9, **characterised in that** the riveting mandrel (2) is produced by means of rolling or cold forming.

11. The rivet or riveted joint in accordance with one of the claims 1 to 10 **characterised in that** the riveting mandrel (2) is designed in one piece.

12. The rivet in accordance with claim 1, **characterised in that** the sleeve section (1) has a shaft (12) having a constant outer diameter, whose first end (121) adjoins at the cavity of the swaging head (11), and whose second end (122) is connected with the riveting mandrel head (21), having at least the same outer diameter, wherein the shaft (12), in the direction from the first end (121) to the second end (122), is designed with an expansion region (A) with a constant inner diameter and an adjoining crushing zone (S) with an at least partially increased inner diameter, and the ribs (22) fits closely in a region of the shaft (12) corresponding to the crushing zone (S).

13. The rivet in accordance with claim 12, **characterised in that** the swaging head (11), and the shaft (12) of the sleeve section (1) consist of different materials.

14. The rivet according to claim 12 or 13, **characterised in that** the sleeve section (1) is produced from a material, and in the region of the swaging head (11) has properties other than those in the region of the shaft (12).

15. The rivet in accordance with one of the claims 12 to 14, **characterised in that** in the crushing zone (S) an inner surface of the shaft (12) is shaped corresponding to a surface of the riveting mandrel (2), in the region of the same designed with ribs (22).

16. The rivet in accordance with one of the claims 12 to 15, **characterised in that** the length (L1) of the ribs (22) is at least 25 %, preferably more than 40 %, of the length (L) of the base body (26) between riveting mandrel head (21) and a point of intended fracture (24) of the base body (26).

17. The rivet in accordance with one of the claims 12 to 16, **characterised in that** the ribs (22) in the ribs region (B) cover at least 40 %, preferably more than 50 %, of the outer surface of the base body (26).

18. The rivet in accordance with one of the claims 12 to 17, **characterised in that** the sleeve section (1) comprises a shaft (12), which consists of a plurality of sections, and/or has a point of intended fracture, or a point of intended deformation, so that before and/or during the forming of a closure head an axial force component acts on a part (3).

## Revendications

1. Rivet pour le raccordement de pièces traversées par des alésages (3, 4), en particulier des pièces de construction d'avions, comprenant une partie douille (1), qui présente une tête d'appui (11) dotée d'une cavité s'étendant axialement et une tige (12) raccordée à la tête d'appui (11), et un boulon riveté (2) qui présente un corps de base sensiblement cylindrique (26) et une tête de boulon riveté (21) élargie par rapport à son diamètre (D) et qui traverse la partie douille (1) par son corps de base (26) le long de la cavité, le boulon riveté (2) présentant des nervures (22) s'étendant axialement au niveau du corps de base cylindrique (26), le matériau de la tige (12) pouvant rentrer entre les nervures (22), **caractérisé en ce que** le boulon riveté (2) présente des cannelures (23) s'étendant dans des plans perpendiculaires à un axe longitudinal (X) autour de ceux-ci et par lesquelles le boulon riveté (2) est en liaison de correspondance géométrique avec la tête d'appui (11) et que les nervures (22) entraînent, lors de l'insertion du boulon riveté (2), un élargissement de la tige (12), les nervures (22) étant réalisés avec des surfaces coniques (223) dirigées vers la tête d'appui (11).

2. Raccord riveté pour le raccordement de pièces traversées par des alésages (3, 4), en particulier des pièces de construction d'avions, comprenant un rivet et les pièces traversée par des alésages (3, 4), le rivet comprenant une partie douille (1) qui est composée d'une tête d'appui (11) dotée d'une cavité s'étendant axialement, et un boulon riveté (2) qui présente un corps de base sensiblement cylindrique (26) et une tête de boulon riveté (21) élargie par rapport à son diamètre (D) et qui traverse la partie douille (1) par son corps de base (26) le long de la cavité, le boulon riveté (2) présentant des nervures (22) s'étendant axialement au niveau du corps de base cylindrique (26), entre lesquelles, lors de l'insertion du boulon riveté (2), du matériau des pièces (3, 4) peut rentrer, et le boulon riveté (2) présentant des cannelures (23) s'étendant dans des plans perpendiculaires à un axe longitudinal (X) et auprès de ceux-ci et par lesquelles le boulon riveté (2) est en liaison de correspondance géométrique avec la tête d'appui (11), **caractérisé en ce que** les nervures (22) sont réalisées avec des surfaces coniques (223) dirigées vers la tête d'appui (11).

3. Rivet ou raccord riveté selon la revendication 1 ou 2, **caractérisé en ce que** les nervures (22) sont disposées entre la tête du boulon riveté (21) et la cavité.

4. Rivet ou raccord riveté selon une des revendications 1 à 3, **caractérisé en ce que** le corps de base (26) traverse la cavité axiale au niveau d'une surface interne (13) de la tête d'appui (11).

5. Rivet ou raccord riveté selon une des revendications 1 à 4, **caractérisé en ce que** les nervures (22) sont disposées symétriquement en rotation par rapport à un axe longitudinal (X) du boulon riveté (2).

6. Rivet ou raccord riveté selon une des revendications 1 à 5, **caractérisé en ce que** les nervures (22) se raccordent à la tête du boulon riveté (21).

7. Rivet ou raccord riveté selon une des revendications 1 à 6, **caractérisé en ce que** les nervures (22) présentent du moins par endroits un contour extérieur de nervure en forme d'arc de cercle ou en particulier en forme d'angle aigu (221).

8. Rivet ou raccord riveté selon une des revendications 1 à 7, **caractérisé en ce que** les nervures (22) sont réalisées avec une section transversale sensiblement identique le long de leur extension axiale.

9. Rivet ou raccord riveté selon une des revendications 1 à 8, **caractérisé en ce que** le boulon riveté (2) a une conformation massive.

10. Rivet ou raccord riveté selon une des revendications 1 à 9, **caractérisé en ce que** le boulon riveté (2) a été fabriqué par laminage ou par déformation à froid.

11. Rivet ou raccord riveté selon une des revendications 1 à 10, **caractérisé en ce que** le boulon riveté (2) est monobloc.

12. Rivet selon la revendication 1, **caractérisé en ce que** la partie douille (1) présente une tige (12) dotée d'un diamètre extérieur constant et dont la première extrémité (121) se raccorde à la cavité de la tête d'appui (11) et dont la seconde extrémité (122) est en liaison avec une tête de boulon riveté (21) ayant un diamètre extérieur au moins identique, la tige (12) étant réalisée, en direction de la première extrémité (121) vers la seconde extrémité (122), avec une partie élargie (A) ayant un diamètre intérieur constant et une zone de refoulement consécutive (S) ayant un diamètre intérieur au moins partiellement élargi et que les nervures (22) reposent dans une zone correspondant à la zone de refoulement (S) de la tige (12).

13. Rivet selon la revendication 12, **caractérisé en ce que** la tête d'appui (11) et la tige (12) de la partie douille (1) sont composées de matériaux différents.

14. Rivet selon la revendication 12 ou 13, **caractérisé en ce que** la partie douille (1) est fabriquée à partir d'un matériau et présente au niveau de la tête d'appui (11) des propriétés autres qu'au niveau de la tige (12).

15. Rivet selon une des revendications 12 à 14, **caractérisé en ce qu'**une surface interne de la tige (12) est formée dans la zone de refoulement (S) en fonction d'une surface du boulon riveté (2) dans la zone constituée par des nervures (22).

16. Rivet selon une des revendications 12 à 15, **caractérisé en ce que** la longueur (L1) des nervures (22) représente au moins 25 %, de préférence plus de 40 %, de la longueur (L) du corps de base (26) entre la tête du boulon riveté (21) et un point de rupture théorique (24) du corps de base (26).

17. Rivet selon une des revendications 12 à 16, **caractérisé en ce que** les nervures (22), dans la zone nervurée (B), recouvrent au moins 40 %, de préférence plus de 50 %, de la surface extérieure du corps de base (26).

18. Rivet selon une des revendications 12 à 17, **caractérisé en ce que** la partie douille (1) comprend une tige (12) qui est composée de plusieurs pièces et/ou présente un point de rupture théorique ou un point de déformation théorique, de sorte que, avant et/ou pendant un formage d'une tête de fermeture, une composante de force axiale agit sur une pièce (3).
